Europäisches Patentamt

European Patent Office

Office européen des brevets

(11) Veröffentlichungsnummer: **0 241 691 B1**

## (12) EUROPÄISCHE PATENTSCHRIFT

(45) Veröffentlichungstag der Patentschrift: **22.04.92**

(21) Anmeldenummer: **87103049.0**

(22) Anmeldetag: **04.03.87**

(51) Int. Cl.5: **B62D 3/12**

(54) Zahnstangenlenkung, insbesondere für Kraftfahrzeuge.

(30) Priorität: **08.03.86 DE 3607783**
**04.10.86 DE 3633947**

(43) Veröffentlichungstag der Anmeldung:
**21.10.87 Patentblatt 87/43**

(45) Bekanntmachung des Hinweises auf die
Patenterteilung:
**22.04.92 Patentblatt 92/17**

(84) Benannte Vertragsstaaten:
**DE FR GB IT SE**

(56) Entgegenhaltungen:
**AU-B- 550 194        DE-A- 2 526 487**
**DE-A- 3 332 483    DE-A- 3 515 583**
**DE-A- 3 524 480    US-A- 4 680 981**

(73) Patentinhaber: **Adam Opel Aktiengesellschaft**
**Bahnhofsplatz 1 Postfach 17 10**
**W-6090 Rüsselsheim(DE)**

(72) Erfinder: **Rohrbach, Wolfgang, Ing. (grad.)**
**Lanzelhohl 18**
**W-6500 Mainz 1(DE)**
Erfinder: **Gräfenstein, Georg, Dipl.-Ing.**
**Seelbacher Grund 34**
**W-6272 Niedernhausen(DE)**
Erfinder: **Beer, Wilhelm, Ing. (grad.)**
**Merowinger Ring 23**
**W-6090 Rüsselsheim7(DE)**
Erfinder: **Kiy, Burghardt,Ing. (grad.)**
**Elbestrasse 35**
**W-6090 Rüsselsheim(DE)**
Erfinder: **Monetha, Eugen,Ing. (grad.)**
**Grundbachstrasse 39**
**W-6090 Rüsselsheim(DE)**

(74) Vertreter: **Rosenfeld, Jürgen, Dipl. Ing. et al**
**Adam Opel Ag Patentabteilung Bahnhofs-**
**platz 1 Postfach 17 10**
**W-6090 Rüsselsheim(DE)**

# Beschreibung

Die Erfindung bezieht sich auf eine Zahnstangenlenkung, insbesondere für Kraftfahrzeuge, mit einer in einem Lenkgetriebegehäuse axial verschiebbar angeordneten, Spurstangen betätigenden Zahnstange und mit einem durch das Lenkrad antreibbaren, im Lenkgetriebehäuse gelagerten, die Zahnstange betätigenden Zahnritzel, wobei an einer oder mehreren Flächen der Lenkung, die beim Lenkvorgang in Reibberührung miteinander stehen (Reibstellen), jeweils im wesentlichen nur an dem der Geradeausfahrt entsprechenden Bereich reibwerterhöhende Maßnahmen vorgesehen sind.

Eine diese Merkmale aufweisende Zahnstangenlenkung zeigt die DE-A-35 24 480. Durch die dort getroffenen Maßnahmen wird eine Erhöhung des Lenkmoments im Mittelbereich der Lenkung, d. h. bei Geradeausfahrt und kleinen Lenkeinschlägen, realisiert, ohne daß hierbei die Lenkgeometrie geändert und/oder die Anpreßkraft zwischen Ritzel und Zahnstange in deren Mittelbereich erhöht werden muß.

Aufgabe der vorliegenden Erfindung ist es, ein entsprechendes Ziel mit technisch besonders einfachen und damit kostensparenden Mitteln zu erreichen.

Gemäß der Erfindung wird die Aufgabe bei einer Zahnstangenlenkung der eingangs bezeichneten Art - alternativ - durch die im kennzeichnenden Teil des Patentanspruchs 1 bzw. des Patentanspruchs 7 angegebenen Merkmale gelöst.

Ein wesentlicher Vorteil der auf Reibwertänderung (nicht aber auf einer Erhöhung der Anpreßkraft zwischen Ritzel und Zahnstange) basierenden Erfindung liegt einmal in einer merkbaren Kostensenkung, weil die Geometrie der Zahnstange unverändert bleibt und - da der Anpreßdruck des Zahnritzels gegen die Zahnstange, wie gesagt, nicht erhöht zu werden braucht - hierfür folgerichtig auch keine zusätzlichen Mittel nötig sind. Des weiteren ermöglicht die Erfindung eine optimale Abstimmung des Grades der Schwer- bzw. Leichtgängigkeit der Lenkung über den gesamten Lenkbereich. Sehr vorteilhaft ist es auch, daß bei einer Umrüstung kein konstruktiver Eingriff in vorhandene Lenkgetriebe erforderlich ist. Vielmehr ist eine nachträgliche Beseitigung von zuviel Spiel und zu großer Leichtgängigkeit der Lenkung im Mittelbereich beim Kundendienst ohne weiteres möglich.

Vorteilhafte Ausgestaltungender Alternativlösung nach Anspruch 1 sind den Patentansprüchen 2 - 6 zu entnehmen.

Bei der Alternativlösung nach Anspruch 7 besitzt zweckmässigerweise das Zahnritzel in seinem rückwärtigen Bereich ein Gewinde, das mit einem hülsenartigen, das Gewinde umschließenden und in dieses eingreifenden Zwischenstück kooperiert.

Hierbei sollte das Gewinde von einem sich an das Lenkgetriebegehäuse anschließenden oder mit diesem einstückig verbundenen Gehäuseteil umgeben sein und das Zwischenstück mit der Innenwandung des Gehäuseteils oder einem mit der Innenwandung verbundenen Teil in Reibschluß stehen.

Der Vorteil dieser Ausführungsform besteht darin, daß an der Zahnstange bzw. am Druckstück der Zahnstange keinerlei reibwerterhöhende Maßnahmen erforderlich sind. Diese beschränken sich vielmehr auf den leicht zugänglichen rückwärtigen Bereich des Lenkgetriebes.

Vorteilhafte Weiterbildungen der Alternativlösung nach Patentanspruch 7 können auch den Patentansprüchen 9 - 15 entnommen werden.

In der Zeichnung sind Ausführungsbeispiele der Erfindung dargestellt, die nachstehend beschrieben werden. Es zeigt:

Fig. 1    eine Zahnstangenlenkung für Kraftfahrzeuge (teilweise aufgebrochen), in Draufsicht betrachtet,

Fig. 2    einen Schnitt längs der Linie II-II in Fig. 1, in gegenüber Fig. 1 vergrößerter Darstellung,

Fig. 3    eine Explosionsdarstellung der Zahnstangenlenkung nach Fig. 1, in perspektivischer Ansicht schräg von vorn entgegen der Fahrtrichtung gesehen,

Fig. 4    die Einzelheit "A" aus Fig. 3, in gegenüber Fig. 3 vergrößerter Darstellung,

Fig. 5    einen Schnitt längs der Linie V-V in Fig. 4,

Fig. 6    die Einzelheit "B" aus Fig. 3, in gegenüber Fig. 3 stark vergrößerter Vorderansicht,

Fig. 7    den Gegenstand von Fig. 6, in Draufsicht betrachtet,

Fig. 8    einen Schnitt längs der Linie VIII-VIII in Fig. 7,

Fig. 9    eine diagrammatische Darstellung des Lenkmomentverlaufs in Abhängigkeit vom Winkel des Lenkeinschlages,

Fig. 10    eine gegenüber Fig. 2 abgewandelte Ausführungsform eines Lenkgetriebes für eine Zahnstangenlenkung, im vertikalen Längsschnitt,

Fig. 11    einen Schnitt längs der Linie XI-XI in Fig. 10,

Fig. 12    einen Schnitt längs der Linie XII-XII in Fig. 10,

Fig. 13    eine weitere Ausführungsform eines Lenkgetriebes, in Darstellung entsprechend Fig. 10,

Fig. 14    einen Schnitt längs der Linie XIV-XIV in Fig. 13,

Fig. 15    eine weitere Ausführungsform eines Lenkgetriebes, in Darstellung entsprechend Fig. 10 und 13,

Fig. 16    einen Schnitt längs der Linie XVI-XVI in Fig. 15, und

Fig. 17    einen Schnitt längs der Linie XVII-XVII in Fig. 16.

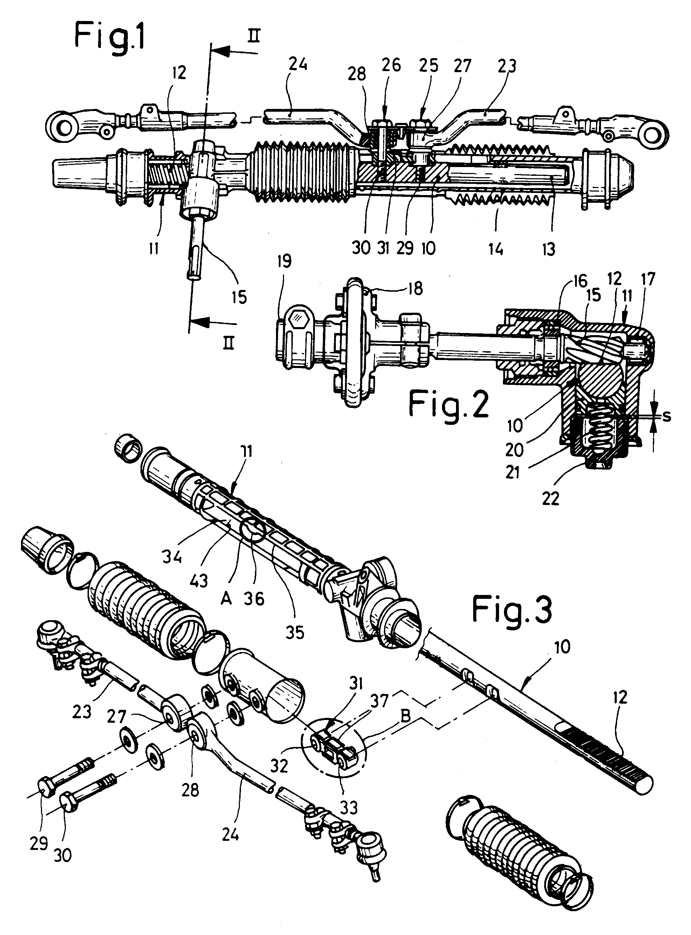

Bei der in Fig. 1 - 3 insgesamt dargestellten Zahnstangenlenkung eines Kraftfahrzeuges bezeichnet 10 eine in einen Lenkgetriebegehäuse 11 axial hin- und herbewegbare Zahnstange. Die Zahnstange 10 weist jedoch nur an einem Ende - bei 12 - eine Schrägverzahnung auf, wohingegen das andere Ende 13 glatt ausgebildet und in einer im Lenkgetriebegehäuse 11 angeordneten Gleitbuchse 14 geführt ist.

Wie insbesondere aus Fig. 2 hervorgeht, steht die Verzahnung 12 der Zahnstange 10 mit einem Zahnritzel 15 in Wirkverbindung, welches bei 16 und 17 im Lenkgetriebegehäuse 11 gelagert und - über ein stoßdämpfendes elastisches Kupplungsglied 18 - von der mit 19 bezifferten Lenkwelle betätigbar ist. Die nur teilweise dargestellte Lenkwelle 19 wird in üblicher und daher nicht näher gezeigter Weise durch das vom Fahrer auf das Lenkrad aufgebrachte Drehmoment (Lenkmoment) in Drehung versetzt. Wie Fig. 2 weiterhin erkennen läßt, wird der nötige Anpreßdruck zwischen Verzahnung 12 der Zahnstange 10 und Zahnritzel 15 durch ein Druckstück 20 bewerkstelligt, welches auf die von der Verzahnung 12 abgewandte rückseitige Fläche der Zahnstange 10 einwirkt. Das Druckstück 20 selbst ist an seiner Rückseite von einer Druckfeder 21 beaufschlagt, die sich mit ihrem hinteren Ende an einer in das Getriebegehäuse 11 eingeschraubten und um das Spiel s verstellbaren Gewindebuchse 22 abstützt.

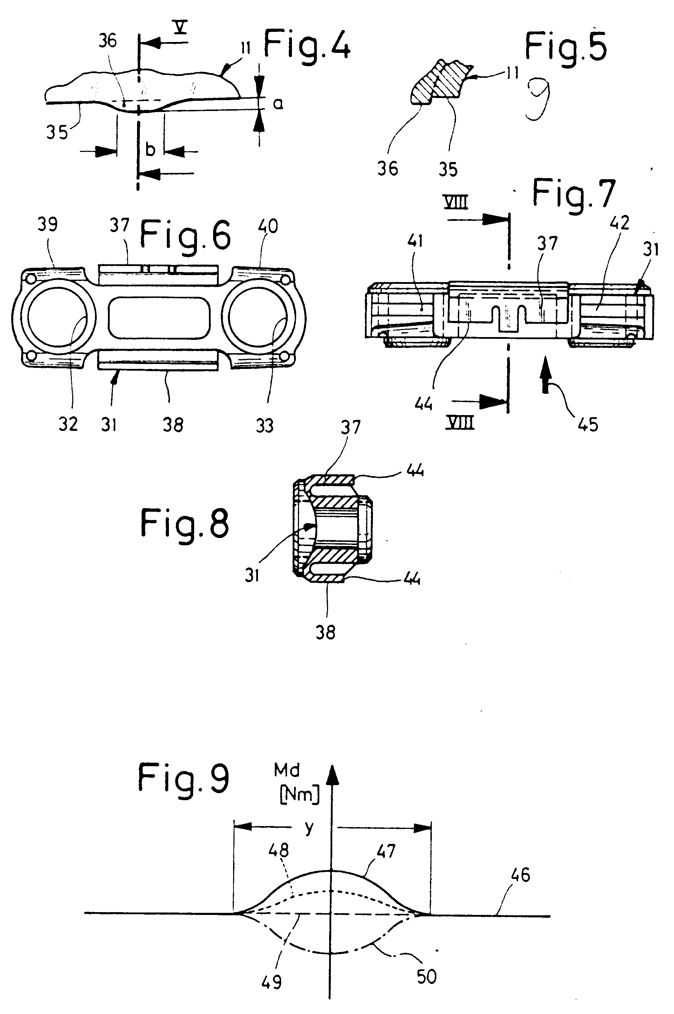

Aus Fig. 1 und 3 ist die Spurstange der Lenkung ersichtlich. Sie ist als sogenannte geteilte Spurstange ausgebildet und besteht demgemäß aus zwei Teilen 23 und 24. Die beiden Teile 23, 24 der Spurstange sind - wie insbesondere Fig. 1 verdeutlicht - jeweils im Mittelbereich der Zahnstange 10 bei 25 bzw. 26 gelenkig befestigt. Die Gelenke 25, 26 werden jeweils gebildet durch ein nach innen abgekröpftes Gelenkauge 27 bzw. 28, das von einer in die Zahnstange 10 eingeschraubten Befestigungsschraube 29 bzw. 30 durchsetzt ist. Zur Abstandshalterung ist zwischen den Gelenkaugen 27, 28 der Spurstange 23, 24 und der Zahnstange 10 ein Gleitstück 31 angeordnet. Das Gleitstück 31 ist in Fig. 3 in Separatdarstellung gezeigt (vgl. aber insbesondere auch die vergrößerten Darstellungen nach Fig. 6, 7 und 8). Es besteht insgesamt aus Kunststoff und besitzt zwei - z. B. eingegossene oder eingespritzte - metallische Führungsbüchsen 32, 33 für die das Gleitstück 31 durchsetzenden Befestigungsschrauben 29, 30.

Bei Geradeausfahrt des Fahrzeugs befindet sich das Gleitstück 31 etwa auf der aus Fig. 1 ersichtlichen Höhe des Lenkgetriebegehäuses 11. Die betreffende Stelle des Lenkgetriebegehäuses 11 ist in Fig. 3 durch den Kreis "A" markiert. Fig. 3 macht des weiteren deutlich, daß das Lenkgetriebegehäuse 11 an dieser Stelle einen axial gerichteten Schlitz 34 von verhältnismäßig großer Breite besitzt. Wie die vergrößerten Darstellungen von Fig. 4 und 5 dieses Lenkgetriebegehäusebereichs erkennen lassen, weist das Lenkgetriebegehäuse 11 an seiner oberen Begrenzungsfläche 35 des Schlitzes 34 eine nach innen gerichtete nockenartige Ausformung 36 auf. Die geometrische Form des Nockens wird so gewählt, daß sich die Kurve 47 oder eine ähnliche fahrzeugspezifische Kurve einstellt. Ein zu steiler Anstieg des Reibmoments im Mittenbereich kann "Rücklaufeigenschaften" der Lenkung beeinträchtigen. Die Höhe a der nockenartigen Ausformung 36 sollte ungefähr 1 mm betragen, wohingegen sich die Längserstreckung b auf etwa 6 mm belaufen kann. Die nockenartige Ausformung 36 im Lenkgetriebegehäuse 11 ist demnach so ausgebildet und angeordnet, daß sie mit der oberen Mittelpartie 37 des Gleitstücks 31 dann in Reibberührung kommt, wenn das Fahrzeug sich in Geradeausfahrt oder in leichter Kurvenfahrt befindet. Wie bereits erwähnt, besteht das Gleitstück 31 und damit auch die mit der nockenartigen Ausformung 36 in Reibberührung kommende Mittelpartie 37 aus Kunststoff. Insbesondere die vergrößerten Darstellungen des Gleitstücks 31 nach Fig. 6 - 8 lassen erkennen, daß die obere Mittelpartie 37 - ebenso wie auch das untere Gegenstück 38 - des Gleitstücks 31 lippenförmig elastisch ausgebildet ist. Um bei stärkeren Lenkeinschlägen eine Berührung der die Gleitbüchsen 32, 33 umgebenden Partien 39, 40 des Gleitstücks 31 mit der nockenartigen Ausformung 36 zu vermeiden, ist es zweckmäßig, in die Flächen 39, 40 axial gerichtete Nuten bzw. Rillen einzuarbeiten. Diese nutenförmigen Rillen sind in Fig. 7 angedeutet und mit 41 und 42 beziffert. Alternativ ist es aber auch möglich, die Ausformung 36, wie in Fig. 5 gezeigt, nur auf die "halbe" Breite der Lenkgehäusewandstärke auszubilden.

Selbstverständlich ist es auch möglich bzw. denkbar - alternativ oder zusätzlich - am unteren Mittelbereich 38 des Gleitstücks 31 eine Reibberührung mit dem Lenkgetriebegehäuse 11 vorzusehen. Hierzu bedürfte es dann entsprechend einer nockenförmigen Ausformung an der unteren Begrenzungswand 43 (Fig. 3) des Längsschlitzes 34 im Lenkgetriebegehäuse 11. Hinsichtlich des Erfordernisses nutenförmiger Rillen an den Partien beidseitig des unteren Mittelbereichs 38 gilt entsprechend das oben gesagte.

Nach einer weiteren Variante wäre es auch denkbar, die nockenartige Ausformung am Lenkgetriebegehäuse 11 so auszubilden bzw. anzuordnen, daß sie mit der in Fig. 7 mit 44 gekennzeichneten Schmalseite der oberen Lippe 37 (bzw. der unteren Lippe 38) des Gleitstücks 31 in Reibberührung kommt. Die Richtung dieser Variante der Reibberührung ist in Fig. 7 durch einen Pfeil 45 verdeutlicht.

In Fig. 9 ist nun die Auswirkung der im vorstehenden beschriebenen örtlichen Reibwerterhöhung der Lenkung in anschaulicher Weise grafisch dargestellt. Hierbei bezeichnet die im wesentlichen parallel zur Abszisse verlaufende Linie 46 das bei Lenkeinschlägen nach rechts oder links vom Fahrer aufzubringende Lenkmoment ($M_d$), welches demgemäß - abgesehen vom Mittelbereich Y, der der Geradeaus- oder einer leichten Kurvenfahrt entspricht, - im wesentlichen konstant bleibt.

Durch die im vorstehenden erläuterten erfindungsgemäßen Maßnahmen wird im Mittelbereich Y eine Erhöhung des Lenkmoments bewirkt, die sich - bezogen auf den Neuzustand des Fahrzeugs - in der nach oben ausgewölbten durchgezogenen Linie 47 ausdrückt. Nach längerer Betriebsdauer des Fahrzeuges wird sich infolge Abnutzung im Mittelbereich Y ein etwa der gepunkteten Linie 48 entsprechender Lenkmomentverlauf bilden. Zum Vergleich ist durch die gestrichelte Linie 49 der Lenkmomentverlauf im Mittelbereich Y ohne die erfindungsgemäßen reibwerterhöhenden Maßnahmen dargestellt, und zwar bezogen auf den Neuzustand des Fahrzeuges. Nach längerem Gebrauch des Fahrzeuges würde sich dann in diesem Bereich der Lenkmomentverlauf, etwa wie durch die strichpunktierte Linie 50 angedeutet, darstellen, was zu den eingangs geschilderten Nachteilen und Unsicherheiten führen würde. Diese werden aber durch die erfindungsgemäße Lenkmomenterhöhung im Mittelbereich Y (vgl. Linien 47 und 48) vorteilhafterweise vermieden.

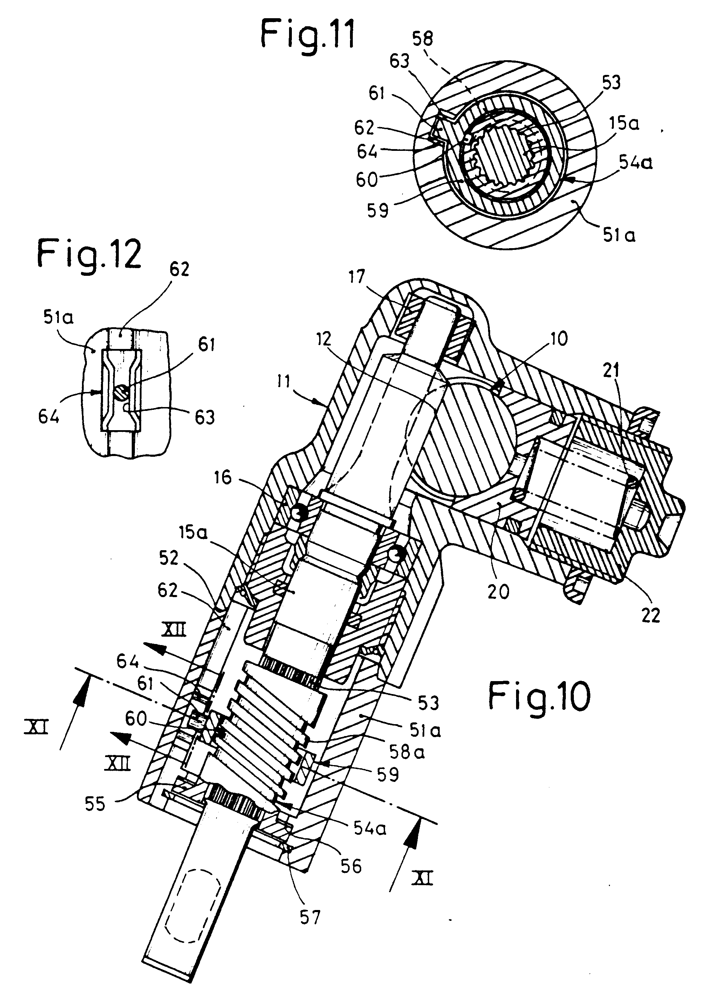

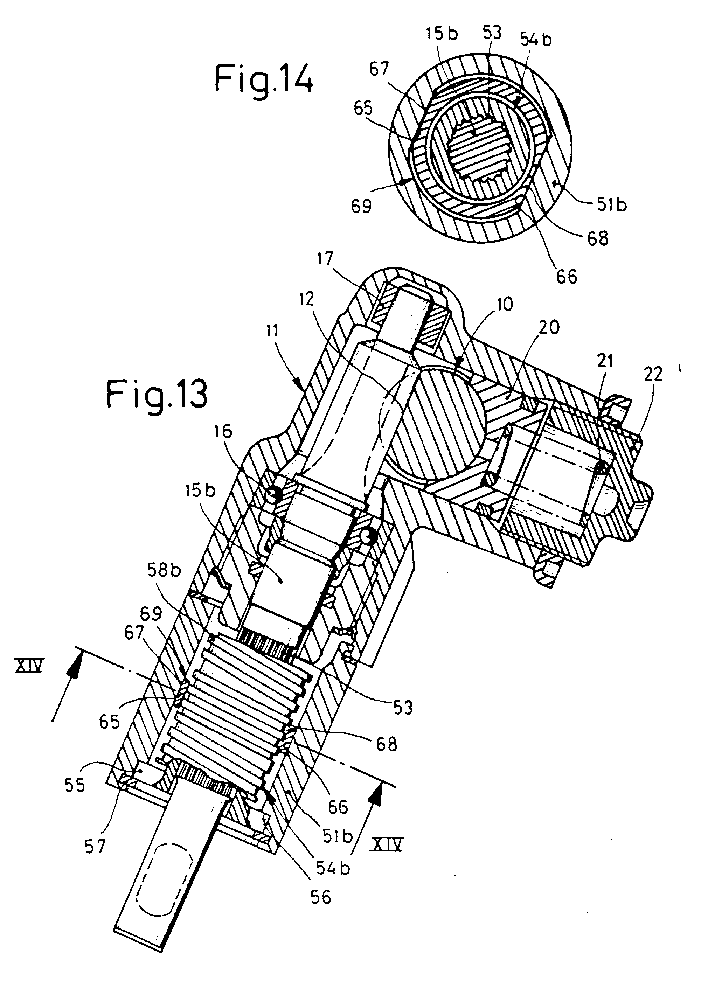

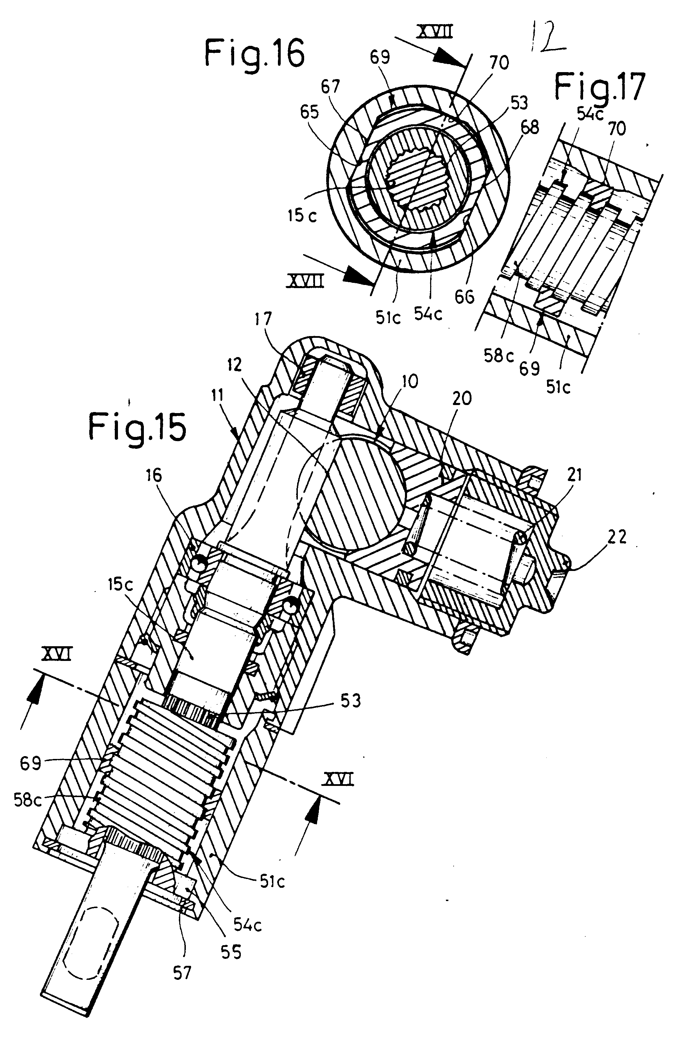

Die Ausführungsformen nach Fig. 10-17 unterscheiden sich von den im vorstehenden beschriebenen Ausführungsformen nach Fig. 1-8 prinzipiell dadurch, daß die reibwerterhöhenden Maßnahmen nicht an der Zahnstange 10, sondern zwischen dem Zahnritzel 15a (Fig. 10 und 11) bzw. 15b (Fig. 13 und 14) bzw. 15c (Fig. 15-17) und einem dieses umgebenden Gehäuseteil 51a (Fig. 10-12) bzw. 51b (Fig. 13 und 14) bzw. 51c (Fig. 15-17) vorgesehen sind. Das Gehäuseteil 51a, 51b, 51c stellt hierbei jeweils einen Bestandteil des Lenkgetriebegehäuses 11 dar, wobei es aber als Separatteil ausgebildet und bei 52 an das Lenkgetriebegehäuse 11 angefügt ist. Das Gehäuseteil 51a, 51b, 51c bildet also gewissermaßen den rückwärten Abschluß des Lenkgetriebegehäuses 11. Im übrigen entspricht das Lenkgetriebegehäuse aber der Ausführungsform nach Fig. 1 und 2 und ist deshalb - ebenso wie dort - mit 11 beziffert. Entsprechendes gilt auch für die im Lenkgetriebegehäuse 11 angeordneten Elemente des Lenkgetriebes, mit Ausnahme des bereits genannten Zahnritzels 15a bzw. 15b bzw. 15c.

In seinem rückwärtigen, außerhalb des eigentlichen Lenkgetriebegehäuses 11 liegenden, vom Gehäuseteil 51a bzw. 51b bzw. 51c umschlossenen Bereich besitzt das Zahnritzel 15a bzw. 15b bzw. 15c eine Keilverzahnung 53, auf der eine Gewindebuchse 54a (Fig. 10-12) bzw. 54b (Fig. 13 und 14) bzw. 54c (Fig. 15-17) drehfest und axial unverschieblich angeordnet ist. Die Gewindebuchse 54a bzw. 54b bzw. 54c stützt sich hierzu mittels eines Bundes 55 einerseits an einem Absatz 56 des Gehäuseteils 51a bzw. 51b bzw. 51c, andererseits an einem in dem Gehäuseteil eingesetzten Sicherungsring 57 ab.

Bei der Ausführungsform nach Fig. 10 und 11 weist die Gewindebuchse 54a ein Gewinde 58a gleichförmiger Steigung mit im Querschnitt etwa rechteckförmigen Gewindegängen auf. Die Gewindebuchse 54a ist von einem hülsenartigen Zwischenstück 59 umgeben, welches einerseits mit der Gewindebuchse 54a und damit auch mit dem Zahnritzel 15a, andererseits mit dem Gehäuseteil 51a zusammenwirkt.

Wie weiterhin aus Fig. 10 und 11 entnehmbar ist, greift das hülsenartige Zwischenstück 59 mit einem an seiner Innenfläche angeformten, radial nach innen gerichteten Zapfen 60 in das Gewinde 58a der Gewindebuchse 54a ein. Am Außenumfang des Zwischenstücks 59 ist ein radial nach außen gerichtetes Zapfenteil 61 ausgebildet, das in einer axialen Führungsnut 62 an der Innenwandung des Gehäuseteils 54a geführt ist. Die vorstehenden Ausführungen machen deutlich, daß das hülsenartige Zwischenstück 59 undrehbar, bei Betätigung des Zahnritzels 15a jedoch axial verschieblich im Gehäuseteil 51a angeordnet ist. Während dieser Axialbewegung steht das Zwischenstück 59 über das Zapfenteil 61 mit der Führungsnut 62 im Reibschluß.

Wie nun Fig. 12 erkennen läßt, weist die Führungsnut 62 eine die Reibung zwischen Zapfenteil 61 und Gehäuseteil 51a verstärkende Verengung 63 auf, die durch ein in die Führungsnut 62 eingesetztes Federelement 64 gebildet wird. Das Federelement 64 und damit die reibwerterhöhende Verengung 63 ist in die Führungsnut 62 an derjenigen Stelle eingesetzt, die der vom Zwischen stück 59 bei Geradeausfahrt des Fahrzeuges eingenommenen Position entspricht. In dieser Stellung greift - wie Fig. 10 und 12 zeigen - das Zapfenteil 61 in die Verengung 63 ein, und das Zwischenstück 59 setzt somit hier einer Betätigung des Zahnritzels 15a einen erhöhten Reibungswiderstand entgegen.

Der im vorstehenden beschriebene Effekt kann noch weiter intensiviert werden, wenn das Gewinde 58a der Gewindebuchse 54a in seinem der Geradeausfahrt entsprechenden Mittelbereich eine andere Steigung aufweist als in seinem einer Kurvenfahrt entsprechenden Endbereichen.

Die Ausführungsform nach Fig. 13 und 14 unterscheidet sich von der Variante nach Fig. 10-12 zum einen durch die Ausbildung des Gewindes 58b auf der Gewindebuchse 54b. D.h. die Gewindebuchse 54b nach Fig. 13 und 14 weist mehrere Gewindeabschnitte mit unterschiedlicher Gewindesteigung auf. Ein weiterer Unterschied zur Ausführungsform nach Fig. 10-12 besteht darin, daß bei der Ausführungsform nach Fig. 13 und 14 die Innenwandung des Gehäuseteils 51b an zwei diametral gegenüberliegenden Stellen 65, 66 abgeflacht ausgebildet ist. Das Gehäuseteil 51b steht dort mit zwei entsprechenden Abplattungen 67, 68 des hier mit 69 bezifferten hülsenartigen Zwischenstückes in Wirkverbindung. Auf diese Weise ist das Zwischenstück 69 im Gehäuseteil 51b gegen Verdrehen gesichert. Reibschluß ist zwischen den Flächen 65, 67 und 66, 68 gegeben. Durch die unterschiedliche Gewindesteigung der Gewindebuchse 54b ergibt sich eine entsprechend unterschiedliche Geschwindigkeit während der Axialverschiebung des Zwischenstücks 69 bei der Betätigung des Zahnritzels 15b. Entsprechend unterschiedlich ist der vom Zwischenstück 69 entgegengesetzte Reibungswiderstand. Die Steigung des Gewindes 58b ist zweckmäßigerweise so ausgelegt, daß der Reibungswiderstand dann am größten ist, wenn sich das Zwischenstück 69 an einer Stelle der Gewindebuchse 54b befindet, die der Geradeausfahrt des Fahrzeugs entspricht.

Das Zusammenwirken des Gewindes 58b der Gewindebuchse 54b mit dem Zwischenstück 69 kann, wie bei der Ausführungsform nach Fig. 10-12, d.h. mittels radial nach innen ragenden Zapfens (in Fig. 13 und 14 nicht gezeigt) erfolgen. Es ist aber alternativ auch möglich, das Zwischenstück 69 mit einem Innengewinde gleichmäßiger Steigung zu versehen, so daß sich die unterschiedlichen Reibungswiderstandswerte aufgrund der Gewindesteigungsunterschiede von Gewindebuchse 54b einerseits und Zwischenstück 69 andererseits ergeben.

Die Ausführungsform nach Fig. 15-17 entspricht hinsichtlich konstruktivem Aufbau und Funktionsweise im wesentlich der Ausführungsform nach Fig. 13 und 14. Ein Unterschied besteht allerdings darin, daß bei der Ausführungsform nach Fig. 15-17 die Gewindebuchse 54c ein Gewinde 58c konstanter Steigung besitzt. Außerdem ist zur Erhöhung des Reibwertes zwischen Gehäuseteil 51c und Zwischenstück 69 an der Innenwandung des Gehäuseteils 51c an einer der Position des Zwischenstücks 69 bei Geradeausfahrt entsprechenden Stelle ein die Reibung zwischen Gehäuseteil 51c und Zwischenstück 69 vergrößernder Nocken 70 angeformt (vgl. insbesondere Fig. 17).

## Patentansprüche

1. Zahnstangenlenkung, insbesondere für Kraftfahrzeuge, mit einer in einem Lenkgetriebegehäuse (11) axial verschiebbar angeordneten, Spurstangen betätigenden Zahnstange (10) und mit einem durch das Lenkrad antreibbaren, im Lenkgetriebegehäuse gelagerten, die Zahnstange (10) betätigenden Zahnritzel (15), wobei an einer oder mehreren Flächen der Lenkung, die beim Lenkvorgang in Reibberührung miteinander stehen (Reibstellen), jeweils im wesentlichen nur an dem der Geradeausfahrt entsprechenden Bereich reibwerterhöhende Maßnahmen vorgesehen sind, dadurch gekennzeichnet, daß ein Gleitstück (31) an der Verbindungsstelle (25, 26) der Spurstangen (23, 24) mit der Zahnstange (10) zwischen Gelenkaugen (27, 28) der Spurstangen (23, 24) und der Zahnstange (10) angeordnet ist und von Befestigungsschrauben (29, 30) für die Spurstangen (23, 24) durchsetzt und beim Lenkvorgang zusammen mit der Zahnstange (10) axial mitbewegt wird, welches an den Seitenflächen eines Ausschnittes im Lenkgetriebegehäuse (11) geführt ist, und daß die Seitenwand (35) des Ausschnittes im Getriebegehäuse (11) an der Stelle, an der sich bei Geradeausfahrt das Gleitstück (31) befindet, nockenartig ausgeformt ist (36), derart, daß in der Geradeausfahrstellung des Lenkgetriebes das Gleitstück (31) mit der nockenartigen Ausformung (36) in erhöhter Reibberührung steht.

2. Zahnstangenlenkung nach Anspruch 1, **dadurch gekennzeichnet,** daß die mit der nockenartigen Ausformung (36) des Lenkgetriebegehäuses (11) in Reibberührung kommenden Partien (37) des Gleitstückes (31) aus Kunststoff bestehen und elastisch ausgebildet sind.

3. Zahnstangenlenkung nach Anspruch 2, **dadurch gekennzeichnet,** daß das Gleitstück (31) insgesamt aus Kunststoff besteht und eingeformte metallische Lagerbüchsen (32, 33) für die Befestigungsschrauben (29, 30) besitzt und daß zwischen den beiden Lagerbüchsen (32, 33) einander gegenüberliegende Lippen (37, 38) ausgebildet sind, von denen mindestens eine (37) mit der nockenförmigen Ausformung (36) des Lenkgetriebegehäuses (11) in Reibberührung kommt.

4. Zahnstangenlenkung nach einem der Ansprüche 1 bis 3, **dadurch gekennzeichnet,** daß beide Seitenwände des Ausschnittes eine nokkenartige Ausformung aufweisen.

5. Zahnstangenlenkung nach Anspruch 3 oder 4, **dadurch gekennzeichnet,** daß die nockenartige(n) Ausformung(en) (36) an der Seitenwandung (35) des Ausschnittes so angeordnet ist (sind), daß sie senkrecht zu den Lagerachsen der Befestigungsschrauben (29, 30) auf die Lippe(n) (37) einwirkt (einwirken), und daß die beidseitig der Lagerbüchsen (32, 33) außen angeordneten Gleitflächen (39, 40) des Gleitstückes (31) in Axialrichtung der Zahnstange (10) verlaufende nutförmige Rillen (41, 42) zur berührungsfreien Durchführung der nockenförmigen Ausformung (36) besitzen.

6. Zahnstangenlenkung nach Anspruch 3 oder 4, **dadurch gekennzeichnet,** daß die nockenförmige(n) Ausformung(en) (36) des Lenkgetriebegehäuses (11) so angeordnet ist (sind), daß sie in Richtung der Achsen der Befestigungsschrauben (29, 30) auf die Stirnseite(n) (44) der Lippe(n) (37) einwirkt (einwirken).

7. Zahnstangenlenkung, insbesondere für Kraftfahrzeuge, mit einer in einem Lenkgetriebegehäuse (11) axial verschiebbar angeordneten, Spurstangen betätigenden Zahnstange (10) und mit einem durch das Lenkrad antreibbaren, im Lenkgetriebegehäuse gelagerten, die Zahnstange (10) betätigenden Zahnritzel (15 a, 15 b, 15 c) wobei an einer oder mehreren Flächen der Lenkung, die beim Lenkvorgang in Reibberührung miteinander stehen (Reibstellen), jeweils im wesentlichen nur an dem der Geradeausfahrt entsprechenden Bereich reibwerterhöhende Maßnahmen vorgesehen sind, **dadurch gekennzeichnet,** daß die reibwerterhöhende Maßnahmen zwischen dem Zahnritzel (15 a, 15 b, 15 c) und einem dieses umgebenden Gehäuseteil (51 a, 51 b, 51 c) des Lenkgetriebes, vorzugsweise unter Zwischenschaltung eines mit dem Zahnritzel einerseits und mit dem Gehäuseteil andererseits zusammenwirkenden Zwischenstücks (59, 69), vorgesehen sind.

8. Zahnstangenlenkung nach Anspruch 7, **dadurch gekennzeichnet,** daß das Zahnritzel (15 a, 15 b, 15 c) in seinem rückwärtigen Bereich ein Gewinde (58 a, 58 b, 58 c) besitzt, das mit dem hülsenartigen, das Gewinde umschließenden und in dieses eingreifenden Zwischenstück (59, 69) kooperiert, und daß das Gewinde (58 a, 58 b, 58 c) von einem sich an das Lenkgetriebegehäuse (11) anschließenden oder mit diesem einstückig verbundenen Gehäuseteil (51 a, 51 b, 51 c) umgeben ist, und daß das Zwischenstück (59, 69) mit der Innenwandung des Gehäuseteils (51 a, 51 b, 51 c) oder einem mit der Innenwandung verbundenen Teil (63, 64) im Reibschluß steht und im Gehäuseteil (51 a, 51 b, 51 c) undrehbar, aber axial verschieblich geführt ist.

9. Zahnstangenlenkung nach Anspruch 7 und 8, **dadurch gekennzeichnet,** daß das Gewinde (58 a, 58 b, 58 c) am Umfang einer Gewindebuchse (54 a, 54 b, 54 c) ausgebildet ist, die drehfest auf einer Keilverzahnung (53) des Zahnritzels (15 a, 15 b, 15 c) sitzt.

10. Zahnstangenlenkung nach Anspruch 7 bis 9, **dadurch gekennzeichnet,** daß das hülsenartige Zwischenstück (59) mit einem an seiner Innenfläche angeformten, radial nach innen gerichteten Zapfen (60) in das Gewinde (58 a) des Zahnritzels (15 a) eingreift und daß am Außenumfang des Zwischenstücks (59) ein radial nach außen gerichtetes Zapfenteil (61) ausgebildet ist, das in einer axialen Führungsnut (62) an der Innenwandung des Gehäuseteils (54 a) geführt ist (Figuren 10 bis 12).

11. Zahnstangenlenkung nach einem oder mehreren der Ansprüche 7 bis 10, **dadurch gekennzeichnet,** daß das Gewinde (58 b) des Zahnritzels (15 b) in seinem der Geradeausfahrt entsprechenden Mittelbereich eine andere Steigung aufweist als in seinen einer Kurvenfahrt entsprechenden Endbereichen (Figuren 13 und 14).

12. Zahnstangenlenkung nach einem oder mehreren der Ansprüche 7 bis 11, **dadurch gekennzeichnet,** daß die Führungsnut (62) an der der Position des Zwischenstücks (59) bei Geradeausfahrt entsprechenden Stelle eine die Reibung zwischen Zapfenteil (61) und Gehäuseteil (51 a) vergrößernde Verengung (63) aufweist (Figuren 10 bis 12).

13. Zahnstangenlenkung nach Anspruch 12, **dadurch gekennzeichnet,** daß die Verengung (63) durch ein in die Führungsnut (62) eingesetztes Federelement (64) gebildet wird.

14. Zahnstangenlenkung nach einem oder mehreren der Ansprüche 7 bis 9 und 11, **dadurch gekennzeichnet,** daß die Innenwandung des Gehäuseteils (51 b, 51 c) an mindestens einer Stelle, vorzugsweise an zwei diametral gegenüberliegenden Stellen (65, 66) abgeflacht ausgebildet ist und dort mit einer bzw. zwei entsprechenden Abplattungen (67, 68) am Außenumfang des hülsenartigen Zwischenstücks (69) in Wirkverbindung steht (Figuren 13 bis 17).

15. Zahnstangenlenkung nach Anspruch 14, **dadurch gekennzeichnet,** daß an der Innenwandung des Gehäuseteils (51 c) an einer der Position des Zwischenstücks (69) bei Geradeausfahrt entsprechenden Stelle ein die Reibung zwischen Gehäuseteil (51 c) und Zwischenstück (69) vergrößernder Nocken (70) angeformt ist (Figuren 15 bis 17).

## Claims

1. Rack and pinion steering, especially for motor vehicles, with a track rod operated by the rack (10) arranged for axial displacement in a steering gear housing (11) and with a pinion (15) operating the rack (10) which is mounted in the steering gear housing and driven by the steering wheel, in which in one or more areas of the steering, which are in frictional contact with each other during the steering process (frictional points), are provided with frictional value increasing measures essentially only in the area corresponding to the straight ahead travel, **characterised** in that at the connecting point (25, 26) of the track rods (23, 24) with the rack (10) between the shackle toggle joints (27, 28) of the track rods (23, 24) and the rack (10) a slider (31) is arranged and penetrated by the fixing screws (29, 30) for the track rods (23, 24) and is axially moved together with the rack (10) during the steering process and is guided on the lateral surfaces of a cutout in the steering gear housing (11), and that the side wall (35) of the cutout in the gear housing (11) is constructed cam-like (36) at the point at which the slider (31) is situated during straight ahead travel in such a way that in the straight ahead travel position of the steering gear the slider (31) has increased frictional contact with the cam-like bulge (36).

2. Rack and pinion steering according to claim 1, **characterised** in that the parts (37) of the slider (31) which come into frictional contact with the cam-like bulge (36) of the steering gear housing (11) are made of plastics and are constructed to be elastic.

3. Rack and pinion steering according to claim 2, **characterised** in that the slider (31) altogether consists of plastics and has incorporated within it metal bearing bushes (32, 33) for the fixing screws (29, 30) and that between the two bearing bushes (32, 33) are constructed oppositely arranged lips (37, 38) of which at least one (37) makes frictional contact with the cam-like bulge (36) of the steering gear housing (11).

4. Rack and pinion steering according to one of the claims 1 to 3, **characterised** in that both side walls of the cutout have a cam-like bulge.

5. Rack and pinion steering according to claim 3 or 4, **characterised** in that the cam-like bulge(s) (36) is (are) arranged on the side wall (35) of the cutout in such a way that it (they) act upon the lips(s) (37) vertically to the bearing axes of the fixing screws (29, 30), and that the slide surfaces (39, 40) of the slider (31) arranged externally on both sides of the bearing bushes (32, 33) have groove-like channels (41, 42) running in the axial direction of the rack (10) for the contact-free passage of the cam-like bulge (36).

6. Rack and pinion steering according to claim 3 or 4, **characterised** in that the cam-like bulge(s) (36) of the steering gear housing (11) is (are) so arranged that it (they) act upon the front face(s) (44) of the lip(s) (37) in the direction of the axes of the fixing screws (29, 30).

7. Rack and pinion steering, especially for motor vehicles, with a rack (10) operated by track rods axially displaceably arranged in a steering gear housing (11) and with a steering wheel driven pinion (15a, 15b, 15c) operating the rack (10 mounted in the steering gear housing, in which in one or more areas of the steering which during the steering process are in frictional contact with each other (frictional points), frictional value increasing measures are provided in each case only in the area essentially corresponding to the straight ahead travel, **characterised** in that the frictional value increasing measures are provided between the pinion (15a, 15b, 15c) and a housing part (51a, 51b, 51c) of the steering gear surrounding this, preferably by interposing an intermediate piece (59, 69) cooperating with the pinion on the one hand and the housing part on the other hand.

8. Rack and pinion steering according to claim 7, **characterised** in that the pinion (15a, 15b, 15c) in its rearward area has a thread (58a, 58b, 58c) which cooperates with the sleeve-like intermediate piece (59, 69) which surrounds the thread and engages with it, and that the thread (58a, 58b, 58c) is surrounded by a housing part (51a, 51b, 51c) which is connected to the steering gear housing (11) or is joined with this in one piece, and that the intermediate piece (59, 69) is fictionally engaged with the inner wall of the housing part (51a, 51b, 51c) or with a part (63, 64) connected to the inner wall and is nonrotatably but axially displaceably guided in the housing part (51a, 51b, 51c).

9. Rack and pinion steering according to claim 7 and 8, **characterised** in that the thread (58a, 58b, 58c) is provided on the circumference of a threaded bush (54a, 54b, 54c) which is nonrotatably seated on a spline (53) of the pinion (15a, 15b, 15c).

10. Rack and pinion steering according to claim 7 to 9, **characterised** in that the sleeve-like intermediate piece (59) with a radially inwardly directed pin (60) formed on its inner surface engages the thread (58a) of the pinion (15a) and on the outer circumference of the intermediate piece (59) is provided a radially outwardly directed pin part (61) which is guided in a an axial guide groove (62) on the outer wall of the housing part (54a) (Figs. 10 to 12).

11. Rack and pinion steering according to one or more of the claims 7 to 10, **characterised** in that the thread (58b) of the pinion (15b) has a different pitch in its centre region corresponding to the straight ahead travel than in its end regions corresponding to curved travel (Figs. 13 and 14).

12. Rack and pinion steering according to one or more of the claims 7 to 11, **characterised** in that the guide groove (62) has a narrowing (63) (Figs. 10 to 12) which is enlarged by the friction between pin part (61) and housing part (51a) at the point corresponding to the position of the intermediate piece (59) during straight ahead travel.

13. Rack and pinion according to claim 12, **characterised** in that the narrowing (63) is formed by a spring element (64) inserted in the guide groove (62).

14. Rack and pinion steering according to one or more of the claims 7 to 9 and 11, **characterised** in that the inner wall of the housing part (51b, 51c) is flat-shaped in at least one place, preferably at two diametrically opposite points (65, 66) and there, with one or two corresponding flattenings, is effectively connected to the outer circumference of the sleeve-like intermediate piece (69) (Figs. 13 to 17).

15. Rack and pinion steering according to claim 14, characterised in that on the inner wall of the housing part (51c) at a point corresponding to the position of the intermediate piece (69) during straight ahead travel there is provided a cam (70) for increasing the friction between housing part (51c) and intermediate piece (69) (Figs. 15 to 17).

**Revendications**

1. Direction 1 crémaillère, en particulier pour véhicules automobiles, conprenant une crémaillère (10) disposée dans un boîtier de direction (11) de manière à pouvoir être déplacée axialement et actionnant des barres d'accouplement et un pignon (15) pouvant être actionné par le volant, monté dans le boîtier de direction (11) et actionnant la crémaillère (10), des mesures augmentant le coefficient de frottement étant prévues sur une ou plusieurs surfaces de la direction qui sont en contact de frottement l'une avec l'autre pendant l'opération de braquage (points de frottement), chaque fois essentiellement uniquement sur la zone correspondant à la marche en ligne droite, caractérisée en ce qu'une pièce coulissante (31) est disposée au point de jonction (25, 26) des barres d'accouplement (23, 24) et de la crémaillère (10), entre des bossages d'articulation (27, 28) des barres d'accouplement (23, 24) et de la crémaillère (10), est traversée par des vis de fixation (29, 30) pour les barres d'accouplement (23, 24), est déplacée axialement avec la crémaillère (10) pendant l'opération de braquage et est guidée sur les surfaces latérales d'une découpure dans le boîtier de direction (11) et en ce que la paroi latérale (35) de la découpure dans la boîte de direction (11) a une forme de came (36) à l'endroit où se trouve la pièce coulissante (31) pendant la marche en ligne droite de telle manière que lorsque le mécanisme de direction est dans la position de marche en ligne droite, la pièce coulissante (31) se trouve en contact de frottement plus inportant sur la déformation on forme de came (36).

2. Direction à crémaillère selon la revendication 1, caractérisée en ce que les parties (37) de la pièce coulissante (31) qui viennent en contact de frottement avec la déformation en forme de came (36) du boîtier de direction (11) sont en matière plastique et sont élastiques.

3. Direction à crémaillère selon la revendication 2, caractérisée en ce que la pièce coulissante (31) est entièrement en matière plastique et possède des coussinets métalliques insérés (32, 33) pour les vis de fixation (29, 30) et en ce que des lèvres opposées (37, 38) sont réalisées entre les deux coussinets (32, 33) dont au moins l'une (37) vient en contact de frottement avec la déformation en forme de came (36) du boîtier de direction (11).

4. Direction à crémaillère selon l'une des revendications 1 à 3, caractérisée en ce que les deux parois latérales de la découpure présentent une déformation en forme de came.

5. Direction à crémaillère selon la revendication 3 ou 4, caractérisée en ce que la (les) déformation(s) en forme de came (36) est (sont) disposée(s) sur la paroi latérale (35) de la découpure de telle manière qu'elle(s) agisse(nt) sur la (les) lèvre(s) (37) perpendiculairement aux axes de montage des vis de fixation (29, 30) et en ce que les surfaces de glissement (39, 40) de la pièce coulissante (31) qui sont disposées à l'extérieur de part et d'autre des coussinets (32, 33) possèdent des rainures en forme d'encoches (41, 42) s'étendent dans la direction axiale de la crémaillère (10) pour le passage sans frottement de la déformation en forme de came (36).

6. Direction à crémaillère selon la revendication 3 ou 4, caractérisée en ce que la (les) déformation(s) en forme de came (36) du boîtier de direction (11) est (sont) disposée(s) de telle manière qu'elle(s) agisse(nt) sur le(s) côté(s) frontal (frontaux) (44) de la (des) lèvre(s) (37) dans la direction des axes des vis de fixation (29, 30).

7. Direction à crémaillère, en particulier pour véhicules automobiles, comprenant une crémaillère (10) disposée dans un boîtier de direction (11) de manière à pouvoir être déplacée axialement et actionnant des barres d'accouplement et un pignon (15) pouvant être actionné par le volant, monté dans le boîtier de direction (11) et actionnant la crémaillère (10), des mesures augmentant le coefficient de frottement étant prévues sur une ou plusieurs surfaces de la direction qui sont en contact de frottement l'une avec l'autre pendant l'opération de braquage (points de frottement), chaque fois essentiellement uniquement sur la zone correspondant à la marche en ligne droite, caractérisée en ce que les mesures augmentant le coefficient de frottement sont prévues entre le pignon (15a, 15b, 15c) et une partie de boîtier (51a, 51b, 51c) du mécanisme de direction entourent ledit pignon, de préférence en intercalant une pièce intermédiaire (59, 69) coopérant d'une part avec le pignon et d'autre part avec la partie de boîtier.

8. Direction à crémaillère selon la revendication 7, caractérisée en ce que le pignon (15a, 15b, 15c) possède dans sa partie arrière un filetage (58a, 58b, 58c) qui coopère avec la pièce intermédiaire (59, 69) en forme de manchon qui entoure le filetage et s'engage dans celui-ci et en ce que le filetage (58a, 58b, 58c) est entouré par une partie de boîtier (51a, 51b, 51c) qui se raccorde au boîtier de direction (11) ou est d'une seule pièce avec celui-ci et en ce que le pièce intermédiaire (59, 69) est en liaison par frottement avec le paroi intérieure de le partie de boîtier (51a, 51b, 51c) ou avec une partie (63, 64) reliée à le paroi intérieure et est guidée dans la partie de boîtier (51a, 51b, 51c) de manière à ne pas pouvoir tourner mais à pouvoir se déplacer axialement.

9. Direction à crémaillère selon la revendication 7 et 8, caractérisée en ce que le filetage (58a, 58b, 58c) est réalisé sur le pourtour d'une douille filetée (54a, 54b, 54c) qui est montée solidaire en rotation sur une cannelure (53) du pignon (15a, 15b, 15c).

10. Direction à crémaillère selon les revendications 7 à 9, caractérisée en ce que le pièce intermédiaire en forme de manchon (59) s'engage dans le filetage (58a) du pignon (15a) avec une saillie (60) formée sur le surface intérieure de ladite pièce et orientée radialement vers l'intérieur et en ce qu'une saillie (61) orientée radialement vers l'extérieur est réalisée sur le pourtour extérieur de le pièce intermédiaire (59) et est guidée dans une rainure de guidage axiale (62) sur la paroi intérieure de le partie de boîtier (54a) (figures 10 à 12).

11. Direction à crémaillère selon l'une ou plusieurs des revendications 7 à 10, caractérisée en ce que le filetage (58b) du pignon (15b) présente dans se zone médiane correspondant à la marche en ligne droite, un autre pas que dans ses zones terminales correspondant eu virage (figures 13 et 14).

12. Direction à crémaillère selon l'une ou plusieurs des revendications 7 à 11, caractérisée en ce que la rainure de guidage (62) présente, à l'endroit correspondant à la position de la pièce intermédiaire (59) pendant la marche en ligne droite, un rétrécissement (63) augmentant le frottement entre la saillie (61) et la partie de boîtier (51a) (figures 10 à 12).

**13.** Direction à crémaillère selon la revendication 12, caractérisée en ce que le rétrécissement (63) est formé par un élément élastique (64) mis en place dans la rainure de guidage (62).

**14.** Direction à crémaillère selon l'une ou plusieurs des revendications 7 à 9 et 11, caractérisée en ce que la paroi intérieure de la partie de boîtier (51b, 51c) est aplatie en eu moins un endroit, de préférence en deux endroits (65, 66) diamétralement opposés et coopère en ces endroits avec un ou deux plats correspondants (67, 68) sur le pourtour extérieur de la pièce intermédiaire en forme de manchon (69) (figures 13 à 17).

**15.** Direction à crémaillère selon la revendication 14, caractérisée en ce qu'une saillie (70) augmentant le frottement entre la partie de boîtier (51c) et la pièce intermédiaire (69) est formée sur la paroi intérieure de la partie de boîtier (51c) à un endroit correspondant à la position de la pièce intermédiaire (69) en marche en ligne droite (figures 15 à 17).

# Fig.1

# Fig.2

# Fig.3

EP 0 241 691 B1

Fig.4

Fig.5

Fig.6

Fig.7

Fig.8

Fig.9

Md
[Nm]

12

EP 0 241 691 B1

# Fig.11

# Fig.12

# Fig.10

13

Fig.14

Fig.13

EP 0 241 691 B1

Fig.16

Fig.17

Fig.15

15